# EUROPEAN PATENT APPLICATION

(11) **EP 4 206 150 A1**
(43) Date of publication of application: **05.07.2023**
(21) Application number: 22183401.3
(22) Date of filing: 06.07.2022
(51) Int. Cl.: C02F 11/06, C05F 11/08, C02F 11/12, C02F 1/34, C02F 1/78, C05F 7/00, C05F 17/10, C05F 17/20, C05F 17/40, C02F 1/44, C02F 1/04, C02F 1/24, C02F 3/34, C02F 11/121

(54) **METHOD FOR PREPARING AGRICULTURAL PRODUCTS FROM BIOLOGICAL SLUDGE CONTAINING MICROBIAL CELLS**

(30) Priority: 28.12.2021 TW 110149099
(71) Applicant: Lin, Chic-Yi, Kaohsiung City 80042 (TW); Lin, Chih-Yen, Kaohsiung City 80042 (TW)
(72) Inventor: LIN, Chih-Yen, 80042 KAOHSIUNG CITY (TW)
(74) Representative: Regimbeau

(57) **Abstract**

A method for preparing agricultural products from a biological sludge containing microbial cells includes the steps of: subjecting the biological sludge to a pretreatment process which includes introducing ozone and supplying a hydraulic pressure to generate cavitation to destroy cell wall of the microbial cells; and subjecting the pretreated biological sludge to a solid-liquid separation treatment to obtain a solid fraction including cell debris and a liquid fraction including a cell lysate solution.

## Description

The present disclosure relates to a method for preparing agricultural products, and more particularly to a method for preparing agricultural products from a biological sludge containing microbial cells.

Biological sludge, also known as organic sludge or activated sludge, is a solid waste produced by treating sewage or wastewater using aerobic or anaerobic microorganisms in a wastewater treatment process. During the wastewater treatment process, the components in the sewage or wastewater are decomposed by these microorganisms, and the obtained biological sludge would contain active microbial populations, residual organic substances such as extracellular polymeric substances generated from microbial metabolism, inert organic substances that do not interact with the microorganisms, and other inorganic substances, etc. A conventional method for treating biological sludge includes directly adding a polymerization agent to the biological sludge, such that the biological sludge agglomerates to form biological flocs, followed by subjecting the biological flocs to a dewatering treatment so as to form a sludge cake having a water content ranging from 80% to 87%, and finally disposing the sludge cake through incineration, landfilling, or compositing.

Since the biological sludge is rich in various components which still have application value in agriculture, the sludge cake obtained from the treatment of the biological sludge can be used as a compost to fertilize and improve the soil. Although the biological sludge might contain nutrients that are beneficial for plant growth, the biological sludge if not specifically treated, would produce odor due to fermentation and decomposition, and might even contaminate surrounding soil environment. In addition, the aforesaid nutrients contained in the biological sludge, when not subjected to any treatment, could not be completely utilized in agricultural industry, thereby limiting the application scope and recycling goals.

Therefore, an object of the present disclosure is to provide a method for preparing agricultural products from a biological sludge containing microbial cells which can alleviate at least one of the drawbacks of the prior art.

According to the present disclosure, the method includes the steps of:
subjecting the biological sludge disposed in a treatment apparatus containing a treatment liquid to a pretreatment process which includes introducing ozone to the biological sludge and supplying a hydraulic pressure into the treatment apparatus to generate cavitation so as to destroy cell wall of the microbial cells in the biological sludge; and
subjecting the pretreated biological sludge to a solid-liquid separation treatment so as to obtain a solid fraction including cell debris and a liquid fraction including a cell lysate solution.

Other features and advantages of the present disclosure will become apparent in the following detailed description of the embodiments with reference to the accompanying drawings, of which:
FIG. 1 is a flow chart illustrating the steps in a first embodiment of a method for preparing agricultural products from a biological sludge containing microbial cells according to the present disclosure;
FIG. 2 is a schematic view illustrating a pretreatment process of the first embodiment of the method according to the present disclosure;
FIG. 3 is a flow chart illustrating the steps in a second embodiment of the method for preparing agricultural products from the biological sludge containing microbial cells according to the present disclosure; and
FIG. 4 is a flow chart illustrating the steps in a third embodiment of the method for preparing agricultural products from the biological sludge containing microbial cells according to the present disclosure.

It is to be understood that, if any prior art publication is referred to herein, such reference does not constitute an admission that the publication forms a part of the common general knowledge in the art, in Taiwan or any other country.

For the purpose of this specification, it will be clearly understood that the word "comprising" means "including but not limited to", and that the word "comprises" has a corresponding meaning.

Unless otherwise defined, all technical and scientific terms used herein have the meaning commonly understood by a person skilled in the art to which this disclosure belongs. One skilled in the art will recognize many methods and materials similar or equivalent to those described herein, which could be used in the practice of this disclosure. Indeed, this disclosure is in no way limited to the methods and materials described.

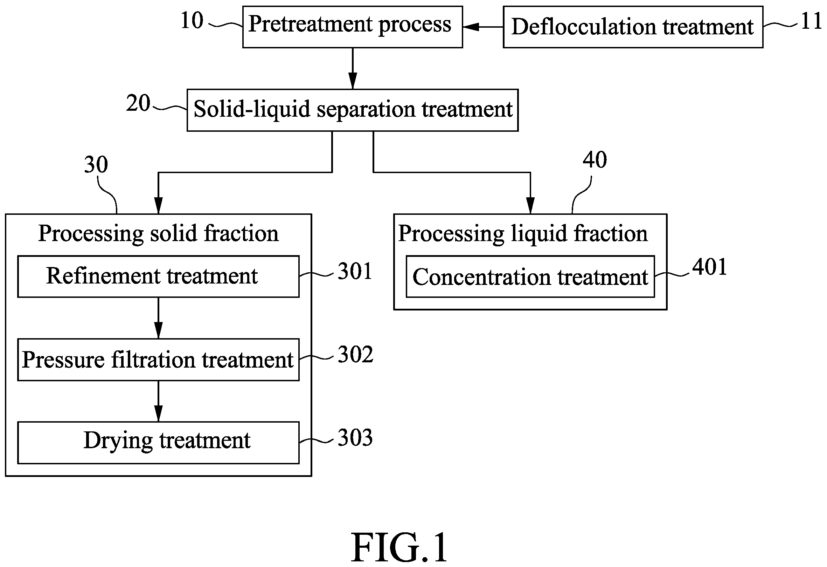

Referring to FIG. 1, a first embodiment of a method for preparing agricultural products from a biological sludge containing microbial cells according to the present disclosure includes the following steps.

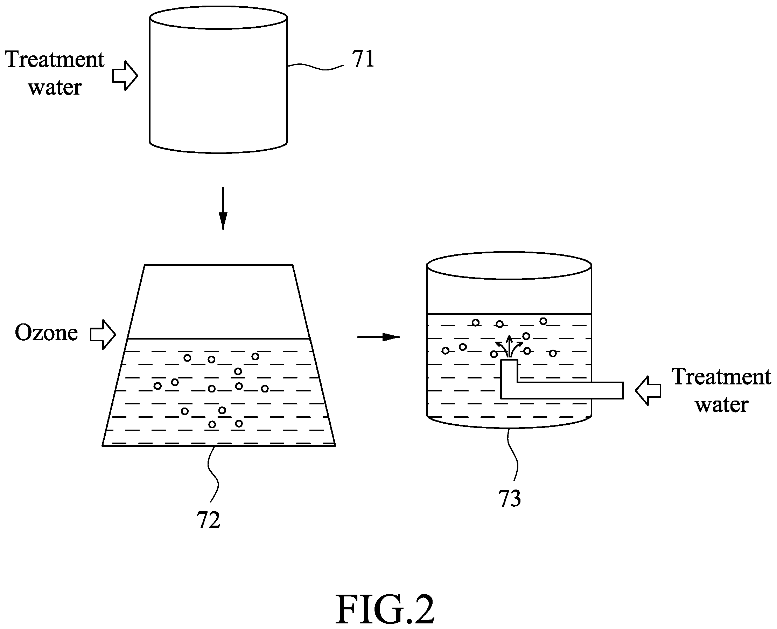

Further referring to FIG. 2, in step 10, the biological sludge is subjected to a pretreatment process. The biological sludge may include living microbial cells, dead microbial cells, inert suspended solids, extracellular polymeric substances (EPS), etc.

To be specific, the biological sludge is disposed in a first treatment apparatus (e.g., an ozone contactor 72) containing a treatment liquid in a weight ratio of 1:99. That is, 1 wt% of the biological sludge is present in the ozone contactor 72 based on a total weight of the biological sludge and the treatment liquid. The pretreatment process includes introducing ozone to the biological sludge under room temperature, with a weight ratio of ozone to the biological sludge ranging from 0.04:1 to 0.06:1, such that the biological sludge is fully in contact with the ozone. Thereafter, a mixture including the biological sludge, ozone and the treatment liquid is introduced into a second treatment apparatus (e.g., a lysis reactor 73), and then a hydraulic pressure of ranging from 2 kg/cm² to 4 kg/cm² is supplied to the second treatment apparatus under room temperature to generate cavitation so as to destroy cell wall of the microbial cells in the biological sludge, such that a lysis product including intracellular components and ruptured cells of the microbial cells, as well as suspended solids, inert suspended substances, degradation products of EPS, among others, is obtained.

In certain embodiments, the method further includes step 11, i.e., performing a deflocculation treatment to disperse flocs of the microbial cells formed in the biological sludge. The deflocculation treatment may be conducted using a deflocculation machine 71 in which a hydraulic pressure is provided to evenly disperse the flocs of the microbial cells at room temperature.

Referring back to FIG. 1, after step 10, step 20 is performed by subjecting the pretreated biological sludge to a solid-liquid separation treatment, so as to obtain a solid fraction including cell debris and a liquid fraction including a cell lysate solution. Examples of the solid-liquid separation treatment may include, but are not limited to, flotation, filtering, and a combination thereof.

After step 20, the solid fraction and the liquid fraction are respectively subjected to step 30 of processing the solid fraction and step 40 of processing the liquid fraction. It should be noted that processing the solid fraction and the liquid fraction may be performed separately or simultaneously.

In step 30, the solid fraction including the cell debris is subjected to a refinement treatment (i.e., sub-step 301), followed by a dewatering treatment, so as to obtain a solid agricultural product. To be specific, in the refinement treatment, the hydraulic pressure, and if necessary, the unreacted ozone discharged from the lysis reactor 73 in step 10, are applied to the solid fraction, such that the cell debris in the solid fraction is further refined to smaller size.

The dewatering treatment may include one of a pressure filtration treatment, a drying treatment, and a combination thereof. The pressure filtration treatment may reduce a water content of the solid fraction to around lower than 50 wt%, or to a range of 46 wt% to 52 wt%. The drying treatment may reduce the water content of the solid fraction to not greater than 10 wt%. The drying treatment may be conducted at a temperature ranging from 60°C to 75°C. In this embodiment, the dewatering treatment includes the pressure filtration treatment (i.e., sub-step 302), followed by the drying treatment (i.e., sub-step 303).

After the dewatering treatment, the resultant solid agricultural product may mainly include the ruptured cell wall of the microbial cells and extracellular substances, such as peptidoglycan, polysaccharide, glycoprotein, chitin, glucan, proteins, amino acids, and other nutrients which are suitable for plant growth. It should be noted that, after the refinement treatment, the solid fraction becomes hydrophobic and harder (e.g., with a hardness close to that of a ceramic material), and the dewatering treatment may be directly performed without adding a polymerization agent thereto. Therefore, the thus obtained solid agricultural product, which contains various nutrients and proteins, may be free from chemical agents and can be applied directly in innocuous agriculture.

In certain embodiments, cole crops, when applied with the solid agricultural product in an amount of 1 wt% or 10 wt% based on a total weight of soil, showed an improved growth in comparison with cole crops not applied with the solid agricultural product (results not shown). This indicates that the solid agricultural product obtained from the first embodiment of the method of this disclosure contains abundant amino acids that are easily absorbed by plants, and thus, can achieve the purpose of improving plant growth.

In step 40, the liquid fraction including the cell lysate solution is subjected to a concentration treatment (i.e. sub-step 401), so as to obtain a liquid agricultural product. Examples of the concentration treatment may include, but are not limited to, nanofiltration, membrane distillation, evaporation, osmosis, and combinations thereof.

In this embodiment, the concentration treatment is nanofiltration that is performed using a porous ceramic membrane. The resultant liquid agricultural product may mainly include intracellular components of the microbial cells, such as carbohydrates, organic acids, nucleic acids, proteins, amino acids, lipids, trace elements (e.g., Ca and Mg), etc.

An experiment was performed to evaluate the effect of the liquid agricultural product on the germination rate of cowpea seeds for four days, in which a control group was not applied with the liquid agricultural product whereas experimental groups 1 and 2 were applied respectively with 50% dilution of the liquid agricultural product and the liquid agricultural product without dilution. The germination rate (in percentages) for each time period is defined as a number of cowpea seeds which showed germination based on a total number of the cowpea seeds. The result is shown in Table 1 below.

**Table 1**

| | Germination rate (%) | | |
|---|---|---|---|
| Time period | Control group | Experimental group 1 | Experimental group 2 |
| Day 1 | 0 | 0 | 0 |
| Day 2 | 0 | 80 | 80 |
| Day 3 | 50 | 80 | 80 |
| Day 4 | 100 | 100 | 100 |

As shown in Table 1, on days 2 and 3, the germination rate of cowpea seeds in the experimental groups 1 and 2 was higher than that in the control group, suggesting that the liquid agricultural product obtained in step 40 is capable of promoting germination of plants, and thus, may be directly utilized in agriculture as a bio-stimulant.

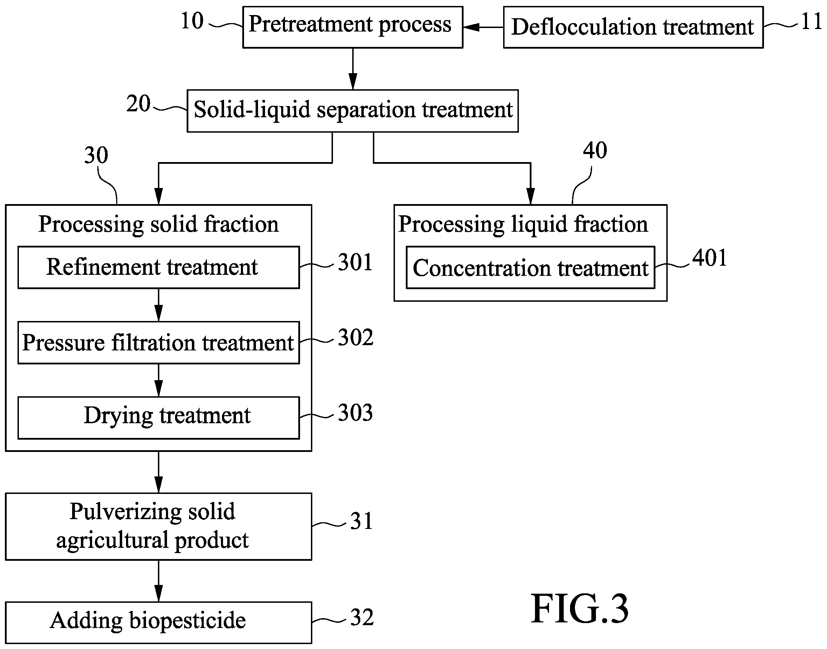

Referring to FIG. 3, a second embodiment of the method for preparing agricultural products from the biological sludge containing microbial cells according to the present disclosure is substantially similar to the first embodiment, except that the second embodiment further includes steps 31 and 32 performed after step 30. In step 31, the solid agricultural product obtained in step 30 is pulverized to form a pulverized solid agricultural product which may be in a fine powder form having improved specific surface area and liquid-absorbility. In step 32, a biopesticide is added to the pulverized solid agricultural product. The biopesticide may be in a liquid form, and may be a bacterial strain selected from the group consisting of *Bacillus thuringiensis, Bacillus subtilis, Trichoderma spp., Actinomyces spp.,* phosphate-solubilizing bacteria (PSB), *Bacillus mycoides,* and combinations thereof.

Since the pulverized solid agricultural product has characteristics of a relatively larger surface area (specific surface area) and an improved liquid-absorbility, the biopesticide in a liquid form, when added in an appropriate amount, may be completely absorbed by the pulverized solid agricultural product to form a slow-release biological fertilizer. In addition, since the pulverized solid agricultural product is nutrient-rich, the bacterial strains of the biopesticide in the slow-release biological fertilizer can maintain active state. In comparison with directly applying the biopesticide to the soil, the slow-release biological fertilizer obtained in step 32 can be applied in a given amount in accordance with the growth state of plants so as to provide pesticidal effect for a relatively longer period of time.

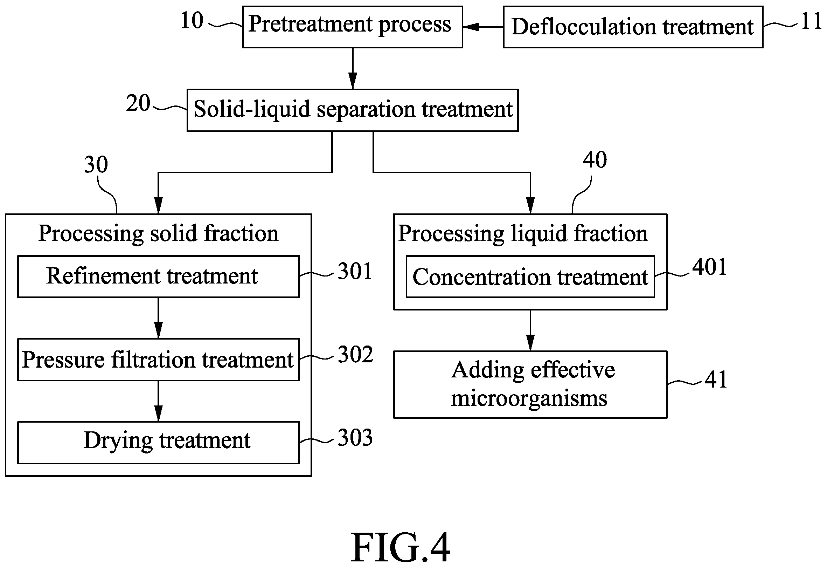

Referring to FIG. 4, a third embodiment of the method for preparing agricultural products from the biological sludge containing microbial cells according to the present disclosure is substantially similar to the first embodiment, except that the third embodiment further includes step 41 performed after sub-step 401. In step 41, effective microorganisms (EM) are added to the liquid agricultural product obtained in sub-step 401 so as to obtain a biofertilizer which may be useful in foliar feeding and may be directly applied to the leaves of a plant). Examples of the effective microorganisms may include, but are not limited to, photosynthetic bacteria, lactic acid bacteria, yeast, actinomycetes, etc.

In summary, in the method for preparing agricultural products from the biological sludge containing microbial cells of the present disclosure, by introducing ozone and supplying a hydraulic pressure to the biological sludge in the pretreatment process, the cell wall of the microbial cells in the biological sludge can be effectively destroyed so as to release intracellular components containing various nutrients from the microbial cells, which can be subsequently processed through the abovementioned steps to obtain various agricultural products that can be widely applied in agriculture, e.g., applied to plants as a slow-release biological fertilizer, a bio-stimulant, or a fertilizer in foliar feeding, thereby achieving the goals of waste recycling, environmental protection and sustainable agriculture.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for preparing agricultural products from a biological sludge containing microbial cells, **characterized by** the steps of:
subjecting the biological sludge disposed in a treatment apparatus containing a treatment liquid to a pretreatment process which includes introducing ozone to the biological sludge and supplying a hydraulic pressure into the treatment apparatus to generate cavitation so as to destroy cell wall of the microbial cells in the biological sludge; and
subjecting the pretreated biological sludge to a solid-liquid separation treatment so as to obtain a solid fraction including cell debris and a liquid fraction including a cell lysate solution.

2. The method as claimed in claim 1, further **characterized by** performing a deflocculation treatment to disperse flocs of the microbial cells formed in the biological sludge.

3. The method as claimed in claim 1 or 2, further **characterized by**, subjecting the solid fraction to a refinement treatment, followed by a dewatering treatment to obtain a solid agricultural product.

4. The method as claimed in claim 3, **characterized in that** the dewatering treatment includes one of a pressure filtration treatment, a drying treatment, and a combination thereof.

5. The method as claimed in claim 4, **characterized in that** the dewatering treatment includes the pressure filtration treatment to reduce a water content of the solid fraction to a range from 46 wt% to 52 wt%.

6. The method as claimed in claim 4, **characterized in that** the dewatering treatment includes the drying treatment to reduce a water content of the solid fraction to not greater than 10 wt%.

7. The method as claimed in claim 6, **characterized in that** the drying treatment is conducted at a temperature ranging from 60°C to 75°C.

8. The method as claimed in any one of claims 3 to 7, further **characterized by** the steps of pulverizing the solid agricultural product, and adding a biopesticide to the pulverized solid agricultural product.

9. The method as claimed in claim 8, **characterized in that** the biopesticide is selected from the group consisting of *Bacillus thuringiensis, Bacillus subtilis, Trichoderma spp., Actinomyces spp.,* phosphate-solubilizing bacteria, *Bacillus mycoides,* and combinations thereof.

10. The method as claimed in any one of claims 1 to 9, further **characterized by**, subjecting the liquid fraction to a concentration treatment so as to obtain a liquid agricultural product.

11. The method as claimed in claim 10, further **characterized by** adding effective microorganisms to the liquid agricultural product.

12. The method as claimed in any one of claims 1 to 11, **characterized in that** the solid-liquid separation treatment is selected from the group consisting of flotation, filtering, and a combination thereof.

13. The method as claimed in claim 10 or 11, **characterized in that** the concentration treatment is selected from the group consisting of nanofiltration, membrane distillation, evaporation, osmosis, and combinations thereof.

14. The method as claimed in claim 13, **characterized in that** the concentration treatment is nanofiltration using a porous ceramic membrane.
